# FASCICULE DE BREVET EUROPEEN

(11) **EP 4 375 106 B1**
(45) Date de publication et mention de la délivrance du brevet: **04.06.2025**
(21) Numéro de dépôt: 23203428.0
(22) Date de dépôt: 13.10.2023
(51) Int. Cl.: B60K 11/08, B60K 11/04, B60K 13/02, F02M 35/10, F02M 35/024, F02M 35/16, F02B 29/04, B60K 17/10, A01M 7/00, B60K 11/06, B62D 49/06, F02M 35/04

(54) **ENGIN AGRICOLE AUTONOME ÉQUIPÉ D'UN SYSTÈME DE MOTORISATION ÉCLATÉ**
SELBSTFAHRENDE LANDWIRTSCHAFTLICHE MASCHINE MIT EINEM SPLITTERMOTORSYSTEM
AUTONOMOUS AGRICULTURAL MACHINE WITH ANPPED DRIVE SYSTEM

(30) Priorité: 28.11.2022 FR 2212419
(43) Date de publication de la demande: 29.05.2024
(73) Titulaire: Exel Industries, 51200 Epernay (FR)
(72) Inventeur: BACLE, Thibault, 69000 LYON (FR); GAUTIER, Jocelyn, 69009 LYON (FR); JEANTET, Paul, 75015 PARIS (FR)
(74) Mandataire: Argyma

(56) Documents cités:
- EP-A1- 1 496 214
- EP-A1- 3 210 467
- EP-A1- 3 987 898
- WO-A1-2017/201445
- DE-A1- 102009 023 771
- FR-A1- 2 608 989

## Description

### DOMAINE TECHNIQUE

La présente invention concerne le domaine des engins agricoles autonomes. En particulier, la présente invention vise un engin agricole autonome, notamment adapté pour de la pulvérisation de produit de traitement sur des cultures, comprenant notamment deux réservoirs disposés sur chaque côté, entre la roue avant et la roue arrière, dans l'empattement de l'engin, et vise un tel engin agricole autonome doté d'un système de motorisation thermique éclaté.

### ETAT DE LA TECHNIQUE

L'état de la technique comprend des exemples d'engin agricole autonome, notamment des engins agricoles autonomes de pulvérisation dont la fonction est de pulvériser un produit de traitement liquide sur des cultures. Par exemple, un tel engin agricole autonome de pulvérisation connu peut être configuré pour pulvériser un produit actif sur des vignes.

De tels engins agricoles autonomes présentent une ossature et quatre roues, ainsi que des outillages et/ou deux réservoirs latéraux, disposés sur leurs flancs, entre la roue avant et la roue arrière, de chaque côté.

Une problématique générale, dans ce contexte, concerne un besoin de davantage de puissance. Les engins agricoles autonomes connus présentent des systèmes de motorisation électrique ou thermique à essence présentant une puissance généralement inférieure à 30 CV.

Cela peut être insuffisant, notamment pour certains outillages ou dans l'hypothèse où l'engin doit porter davantage d'équipements.

Pour satisfaire ce besoin, il est envisagé l'utilisation d'un système de motorisation thermique de type diesel.

Mais l'intégration d'un tel système de motorisation thermique de type diesel rend nécessaire l'intégration d'un échappement, d'un filtre à air, d'un système de refroidissement, etc.

Pour intégrer un tel système de motorisation avec ses accessoires, il est a priori nécessaire d'augmenter le volume de l'engin agricole autonome, soit en disposant des équipements et accessoire en déport longitudinal, c'est-à-dire s'étendant au moins en partie au-delà de l'ossature de l'engin, en longueur, vers l'extérieur, soit en disposant des équipements sur le dessus de l'engin, de sorte à augmenter la hauteur totale de l'engin. Sinon, il faudrait élargir l'engin agricole, ce qui est impossible dans la plupart des cas, la largeur et l'empattement des engins agricoles étant contraints par la largeur de la végétation, typiquement des rangs de vignes, et par l'espacement entre les rangs. La longueur des engins est quant à elle contrainte par le besoin de disposer d'une manoeuvrabilité adaptée.

Ainsi, les solutions connues ou a priori envisageables présentent des inconvénients. La présence d'éléments en déport longitudinal augmente l'encombrement et le risque de choc avec l'environnement. En effet, si des outils montés sur l'engin agricole autonome devaient se trouver à l'avant ou à l'arrière de l'engin, en déport, alors ces outils ne se trouveraient plus sur des positions et trajectoires totalement connues, anticipables et maitrisables, et présenteraient par conséquent un risque dans la planification de la navigation autonome de l'engin agricole autonome, et induiraient par conséquent un risque en matière de sécurité.

En outre, l'augmentation de la hauteur de l'engin engendre une élévation de son centre de gravité, ce qui réduit sa stabilité et augmente le risque de renversement de l'engin, notamment sur une parcelle comprenant pentes et dévers. L'augmentation de la largeur n'est pas souhaitable, voire est impossible. Un autre exemple d'engin agricole autonome comprenant une ossature ayant une section en U inversé et un système de motorisation thermique comportant un moteur est aussi connu du document EP3987898A1.

Pour pallier ces inconvénients, la présente invention propose un engin agricole autonome avec un système de motorisation thermique éclaté et un système de refroidissement spécifique.

### PRESENTATION DE L'INVENTION

Plus précisément, l'invention a pour objet un engin agricole autonome comprenant une ossature ayant une section en U inversé, à laquelle est reliée au moins une roue avant et au moins une roue arrière et définissant une voie, l'ossature présentant deux flancs, correspondant aux branches du U inversé et un toit, correspondant à la base du U inversé ;

L'engin agricole autonome comprend par ailleurs un système de motorisation thermique comportant un moteur.

L'engin agricole autonome comprend un système de refroidissement ayant une galerie de circulation d'air disposée en partie supérieure de l'ossature, directement sous le toit, la galerie de circulation d'air ayant au moins une ouverture pour permettre l'admission d'air extérieur dans la galerie de circulation d'air et une sortie d'air supérieure pour expulser de l'air chaud vers le haut, au-dessus du toit.

Le système de refroidissement comporte également un dispositif de ventilation pour assurer la circulation d'air dans la galerie de circulation d'air.

La galerie de circulation d'air est configurée pour permettre la circulation d'air pour refroidir le moteur, notamment pour refroidir un flux d'eau circulant dans le moteur et/ou un flux d'huile circulant dans des circuits hydrauliques de systèmes hydrauliques de l'engin agricole autonome.

Selon un mode de réalisation, la galerie de circulation d'air comprend des couloirs longitudinaux et transversaux agencés pour ménager, entre ces couloirs, au moins un volume, l'engin agricole autonome comprenant au moins un radiateur disposé dans ledit volume, de sorte à dissiper de la chaleur dans l'air circulant dans la galerie de circulation d'air.

Avantageusement, le dispositif de ventilation comprend au moins un ventilateur disposé au-dessus du toit.

Selon un mode de réalisation, la galerie de circulation d'air a une ouverture arrière et deux ouvertures longitudinales pour permettre l'admission d'air extérieur dans la galerie de circulation d'air.

Notamment, l'au moins une ouverture de la galerie de circulation d'air peut être fermée par un grillage configuré pour laisser passer l'air et pour bloquer l'admission de corps étrangers dans la galerie de circulation d'air.

Selon un mode de réalisation, le système de motorisation comprend également un dispositif d'échappement et un filtre à air, le moteur étant disposé d'un côté de l'ossature, c'est-à-dire sensiblement dans l'alignement d'une branche de la section en U de l'ossature, et le filtre à air étant disposé à l'opposé du moteur, c'est-à-dire sensiblement dans l'alignement d'une branche opposée de la section en U de l'ossature, le filtre à air étant relié au moteur par un canal de circulation d'air.

Avantageusement, l'engin agricole autonome comprend par ailleurs au moins une pompe principale d'avancement, une pompe de gavage de la pompe principale d'avancement et une pompe accessoire disposée dans un volume situé entre une zone porte-outil, située dans la voie et dans l'empattement de l'engin agricole autonome, et le toit, la pompe principale d'avancement étant configurée pour fournir de l'énergie hydraulique à des systèmes hydrauliques permettant l'avancement de l'engin agricole autonome et la pompe accessoire étant configurée pour fournir de l'énergie hydraulique à des systèmes hydrauliques permettant l'animation d'outillage monté sur le porte-outil.

Selon un mode de réalisation, l'engin agricole autonome comprend un turbo et un refroidisseur intermédiaire, dans lequel le système de refroidissement est par ailleurs configuré pour refroidir un flux d'air d'admission en sortie du turbo, le flux d'air d'admission en sortie du turbo étant refroidi par l'air circulant dans la galerie de circulation d'air au moyen du refroidisseur intermédiaire.

Notamment, le moteur est un moteur diesel, par exemple ayant une puissance supérieure à 50 CV.

Selon un mode de réalisation, l'engin agricole autonome forme un engin agricole autonome de pulvérisation comprenant deux réservoirs latéraux disposés substantiellement entre la roue avant et la roue arrière, respectivement de chaque côté de l'engin agricole autonome de pulvérisation, l'engin agricole autonome de pulvérisation comprenant par ailleurs un système de pulvérisation, le système de pulvérisation comprenant au moins deux panneaux récupérateurs latéraux, les réservoirs latéraux et les panneaux récupérateurs étant situés dans la voie de l'engin agricole autonome de pulvérisation, correspondant à sa largeur, sensiblement dans l'alignement de chaque flanc défini par l'ossature, de chaque côté de l'engin agricole autonome de pulvérisation.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
la figure 1 montre une vue en perspective d'un exemple de l'engin agricole autonome selon l'invention ;
la figure 2 montre une vue en perspective d'un exemple de l'engin agricole autonome selon l'invention, faisant apparaître la galerie de circulation d'air ;
la figure 3 montre une vue de côté d'un exemple de l'engin agricole autonome selon l'invention ;
la figure 4 représente un gabarit de l'engin agricole autonome.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un engin agricole autonome. Dans un mode de réalisation, l'engin agricole autonome est configuré pour permettre la pulvérisation de produit actif. Dans ce cas, l'engin agricole autonome comprend des réservoirs latéraux contenant un produit de traitement.

Par exemple, l'engin agricole autonome est un enjambeur quatre roues, autonome, permettant notamment, par exemple, le traitement de vignes. Dans ce cas, les réservoirs latéraux sont notamment disposés de part et d'autre, entre la roue avant et la roue arrière, dans l'empâtement de l'engin agricole autonome de pulvérisation.

L'engin agricole autonome peut toutefois être configuré pour réaliser d'autres fonctions au moyen d'autres outillages. Par exemple, l'engin agricole autonome peut être équipé d'une rogneuse.

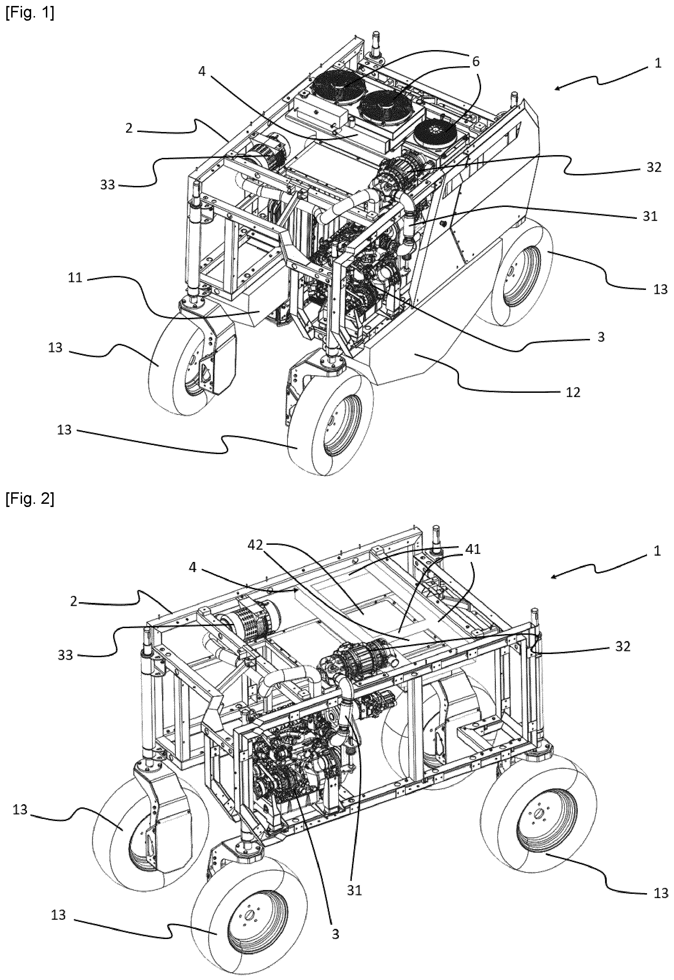

En référence aux figures 1 à 3, la présente invention s'applique à un engin agricole autonome 1 équipé de panneaux récupérateurs et de réservoirs de produit de traitement, l'engin agricole autonome étant configuré pour permettre la pulvérisation d'une parcelle de vignes. Cet exemple est toutefois illustratif. La possibilité d'intégrer des panneaux récupérateurs et des réservoirs latéraux de produit de traitement est avantageuse et cette possibilité constitue un mode de réalisation préféré. Toutefois, l'engin agricole autonome peut être configuré pour réaliser d'autres fonctions. Notamment, l'engin agricole autonome 1 peut ne pas être équipé de panneaux récupérateurs ni de réservoirs de produit, mais être équipé d'un porte-outil sur lequel est monté une rogneuse ou tout autre outil de travail du sol.

Ainsi, l'engin agricole autonome comprend un porte-outil situé dans la voie et dans l'empattement de l'engin, notamment pour porter un outillage disposé sur les flancs de l'engin, à l'intérieur. Le porte-outil peut recevoir un outillage de type rogneuse par exemple. La zone du porte outil peut aussi recevoir des panneaux récupérateurs latéraux, sous lesquels sont disposés des réservoirs latéraux 11, 12.

L'engin agricole autonome 1 représenté sur les figures 1 à 3 comprend une ossature 2 ayant une section en U inversé. L'engin agricole autonome 1 présente ici des réservoirs latéraux 11 et 12 destinés à contenir un produit de traitement, notamment un liquide ou une bouillie, pour traiter des cultures, notamment des vignes.

La section en U comprend deux branches verticales et une base horizontale définissant la partie supérieure de l'ossature 2. L'ossature 2 comprend ainsi deux branches définissant les flancs de l'engin agricole autonome 1 et une base définissant un toit de l'engin. L'engin comprend ici quatre roues 13, soit deux roues avant et deux roues arrière. Les roues avant ont un axe de rotation et les roues arrière ont un axe de rotation, les axes de rotation avant et arrière définissant un empattement de l'engin. La largeur de l'ossature 2, correspondant à la distance entre les roues gauche et les roues droites, définit la voie de l'engin agricole autonome 1. L'engin agricole autonome 1 représenté à titre illustratif sur les figures 1 à 3 forme ainsi un enjambeur autonome 1 de pulvérisation

L'engin agricole autonome 1 de pulvérisation comprend ici des panneaux récupérateurs configurés pour capturer toute gouttelette de produit de traitement traversant la végétation à traiter. Ces panneaux récupérateurs sont de préférence associés à des cuves de récupération disposés en-dessous et reliées à des pompes péristaltiques pour réintroduire le produit de traitement récupéré dans les réservoirs latéraux 11, 12.

L'engin agricole autonome 1 comprend par ailleurs un système de motorisation fondé sur un moteur thermique 3, notamment de type diesel, avec son système de refroidissement. Le système de motorisation comporte un dispositif d'échappement relié au moteur 3. De préférence, le moteur 3 étant de type diesel, le dispositif d'échappement comprend, à l'extrémité de la tubulure d'échappement 31, un filtre à particules 32. En particulier, le filtre à particules 32 est adapté à la réglementation européenne en matière de moteur thermique de type diesel.

Le toit de l'engin agricole autonome 1 est de préférence le plus bas possible afin de garantir un centre de gravité le plus bas possible et donc une meilleure stabilité dans la pente et le devers.

De plus, lorsque l'engin agricole autonome 1 est configuré, comme ici, pour de la pulvérisation, alors les panneaux récupérateurs doivent de préférence être disposés dans l'empattement et dans la voie de l'engin.

Selon l'invention, le système de motorisation est éclaté : le filtre à air 33 est côté opposé au moteur 3. Cela permet de loger les panneaux récupérateurs dans l'empattement et dans la voie sans augmenter la taille ni la hauteur de l'engin agricole autonome 1. Le moteur 3 est refroidi par un système de refroidissement. Le système de refroidissement est configuré pour refroidir le moteur 3 du système de motorisation, notamment l'eau circulant dans le moteur 3, mais aussi, le cas échéant, l'huile circulant dans des systèmes hydrauliques de l'engin agricole autonome 1 et éventuellement l'air d'admission en sortie d'un turbo lorsque le système de motorisation en est équipé.

Selon l'invention, le système de refroidissement comprend une galerie de circulation d'air 4 disposée immédiatement sous le toit de l'engin agricole autonome 1.

La galerie de circulation d'air 4 comprend des couloirs 41 avec des parois fermées et comporte au moins une ouverture 43 pour permettre l'admission d'air extérieur dans la galerie. L'au moins une ouverture 43 peut être grillagée pour éviter l'admission de corps étrangers.

De préférence, la galerie de circulation d'air 4 comprend deux couloirs latéraux s'étendant sur les flancs de l'engin agricole autonome 1 et un couloir arrière s'étendant transversalement, vers l'arrière de l'engin.

Les couloirs latéraux et le couloir arrière peuvent chacun comprendre une ouverture 43 d'admission d'air.

Un avantage de la galerie de circulation d'air 4 située au sommet de l'engin agricole autonome 1 et comprenant des ouvertures 43 d'admission d'air, par définition également au sommet de l'engin, réside dans le fait que l'air aspiré dans la galerie de circulation d'air 4 et permettant le refroidissement du moteur 3 est moins sujet à contenir des résidus végétaux par rapport à des systèmes pour lesquels l'admission d'air est réalisée plus bas, notamment à proximité de la végétation. Le système de refroidissement à air, dans l'invention, est ainsi moins sujet à l'encrassement.

L'air extérieur, frais, est ainsi admis dans la galerie de circulation d'air 4 et alimente des refroidisseurs pour refroidir les fluides respectifs du moteur 3. L'air chaud est expulsé vers le haut, au-dessus du toit.

Par exemple, les couloirs 41 formant la galerie comprennent des couloirs longitudinaux et transversaux ménageant des volumes, entre ces couloirs, lesdits volumes 42 recevant des radiateurs configurés pour transmettre à l'air circulant dans la galerie de la chaleur capturée par échange thermique avec l'eau circulant dans le moteur 3 ou avec l'huile circulant dans des circuits hydrauliques de l'engin ou avec l'air d'admission en sortie de turbo du système de motorisation, aux fins de refroidissement de ces éléments. Notamment, il peut être ainsi défini trois volumes 42 pour trois radiateurs.

L'engin agricole autonome 1 comprend notamment, sur le toit de l'engin, au moins un ventilateur 6, pour mettre en circulation l'air admis dans la galerie de circulation d'air 4. Par exemple, l'engin agricole autonome 1 comporte à cette fin trois ventilateurs électriques 6. Alternativement, l'engin agricole autonome 1 peut comporter à cette fin au moins un ventilateur hydraulique.

Un avantage de l'invention est que, compte tenu de la disposition de la galerie de circulation d'air 4 au somment de l'engin agricole autonome 1, au niveau du toit correspondant à la base de la forme de U inversé de l'ossature 2, on peut disposer d'une galerie de circulation d'air de grande dimension, notamment s'étendant sensiblement sur toute la largeur de l'engin agricole autonome 1, et sur une portion substantielle de sa longueur. Ainsi, les pertes de charge dans le flux d'air circulant dans ladite galerie de circulation d'air 4 sont réduites. En conséquence, des ventilateurs électriques ne nécessitant pas de courant supérieur à 25 A sont suffisants pour obtenir un fonctionnement adéquate du système de refroidissement, c'est-à-dire pour compenser les pertes de charge et permettre un débit d'air suffisant dans le système de refroidissement pour assurer le refroidissement du moteur 3, dont l'eau circulant dans le moteur et/ou l'huile circulant dans des circuits hydrauliques de l'engin et/ou l'air d'admission en sortie de turbo du système de motorisation.

Le système de refroidissement est thermiquement connecté au moteur 3, l'eau circulant dans le moteur 3 étant refroidie par l'intermédiaire de l'air frais issu de la galerie de circulation d'air 4. Le système de refroidissement peut également être thermiquement connecté au turbo du système de motorisation, s'il en est équipé, l'air d'admission en sortie du turbo étant refroidi par l'intermédiaire de l'air frais issu de la galerie de circulation d'air 4. Le système de refroidissement peut également être thermiquement connecté à des circuits hydrauliques de l'engin agricole autonome, l'huile circulant dans ces circuits hydrauliques étant refroidie par l'intermédiaire de l'air circulant dans la galerie de circulation d'air 4.

En outre, dans le cas où le système de motorisation comprend un turbo, l'air d'admission en sortie du turbo peut égalent être refroidi par l'air frais circulant dans la galerie de circulation d'air 4, en particulier au moyen d'un refroidisseur intermédiaire (désigné sous le terme « intercooler » en anglais), permettant de refroidir l'air d'admission en sortie du turbo, et ainsi d'augmenter les performances et la qualité de la combustion dans le moteur 3, et de réduire la consommation.

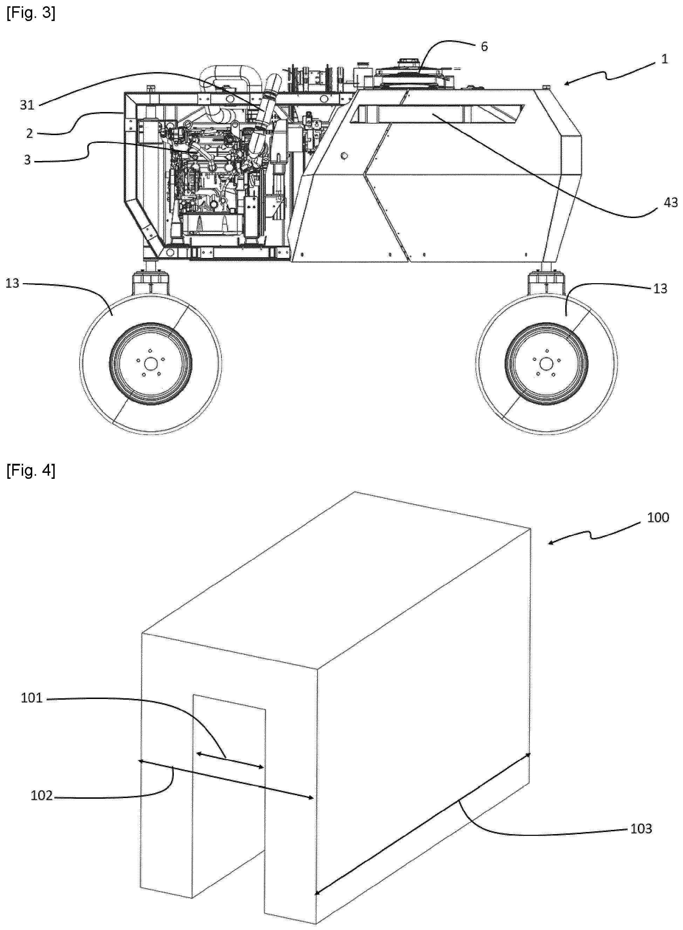

Il faut noter que l'absence d'élément en déport améliore la sécurité. En effet, l'engin agricole autonome 1 s'inscrit dans un gabarit, représenté à la figure 4. Aucun outillage ni aucun élément ne fait saillie par rapport à ce gabarit 100, tout outillage étant confiné à l'intérieur du tunnel délimité par l'ossature 2. Ainsi, il n'est pas possible qu'un accident survienne à raison d'un outillage situé en déport par rapport à l'ossature 2. Cela simplifie la gestion de la sécurité de l'engin agricole autonome 1. Le gabarit 100 est défini par l'usage souhaité de l'engin agricole autonome 1. En particulier, la largeur intérieure 101 du tunnel défini par le gabarit 100 et l'ossature 2 de l'engin agricole autonome 1 est par exemple adaptée pour enjamber un rang de vignes. La largeur extérieure 102 du gabarit 100 est adaptée pour permettre par exemple la circulation de l'engin agricole autonome 1 entre les rangs adjacents au rang enjambé.

La longueur 103 du gabarit est en outre limitée par l'usage souhaité de l'engin agricole autonome 1. En particulier, la longueur 103 est limitée de sorte que la manoeuvrabilité de l'engin agricole autonome 1 soit adaptée à l'usage, notamment la pulvérisation de vignes.

L'engin peut ainsi porter des panneaux récupérateurs sans augmenter l'empattement et sans déborder de la voie de l'engin.

Notamment, l'engin agricole autonome par ailleurs au moins une pompe principale d'avancement, une pompe de gavage de la pompe principale d'avancement et une pompe accessoire disposées dans un volume situé entre la zone porte-outil, où se trouvent par exemple des panneaux récupérateurs, et le toit. La pompe principale d'avancement est notamment configurée pour fournir de l'énergie hydraulique à des systèmes hydrauliques permettant l'avancement de l'engin agricole autonome 1. La pompe accessoire fournit notamment de l'énergie hydraulique à des systèmes hydrauliques permettant l'animation d'outillage monté sur le porte-outil de l'engin agricole autonome 1. Le déport de ces pompes est notamment rendu possible par la mise en oeuvre d'une transmission à courroie ou à chaîne par exemple.

La puissance du moteur 3 est notamment supérieure à 50 CV. En particulier, le moteur est un moteur diesel.

## Revendications

1. Engin agricole autonome (1) comprenant une ossature (2) ayant une section en U inversé, à laquelle est reliée au moins une roue (13) avant et au moins une roue (13) arrière et définissant une voie, l'ossature (2) présentant deux flancs, correspondant aux branches du U inversé et un toit, correspondant à la base du U inversé,
l'engin agricole autonome (1) comprenant par ailleurs un système de motorisation thermique comportant un moteur (3), **caractérisé en ce que** l'engin agricole autonome (1) comprenant un système de refroidissement ayant une galerie de circulation d'air (4) disposée en partie supérieure de l'ossature (2), directement sous le toit, la galerie de circulation d'air (4) ayant au moins une ouverture (43) pour permettre l'admission d'air extérieur dans la galerie de circulation d'air (4) et une sortie d'air supérieure pour expulser de l'air chaud vers le haut, au-dessus du toit,
le système de refroidissement comportant également un dispositif de ventilation pour assurer la circulation d'air dans la galerie de circulation d'air (4),
la galerie de circulation d'air (4) étant configurée pour permettre la circulation d'air pour refroidir le moteur (3), notamment pour refroidir un flux d'eau circulant dans le moteur (3) et/ou un flux d'huile circulant dans des circuits hydrauliques de systèmes hydrauliques de l'engin agricole autonome (1).

2. Engin agricole autonome (1) selon la revendication 1, dans lequel la galerie de circulation d'air (4) comprend des couloirs (41) longitudinaux et transversaux agencés pour ménager, entre ces couloirs (41), au moins un volume (42), l'engin agricole autonome (1) comprenant au moins un radiateur disposé dans ledit volume (42), de sorte à dissiper de la chaleur dans l'air circulant dans la galerie de circulation d'air (4).

3. Engin agricole autonome (1) selon la revendication 1 ou 2, le dispositif de ventilation comprenant au moins un ventilateur (6) disposé au-dessus du toit.

4. Engin agricole autonome (1) selon l'une des revendications précédentes, la galerie de circulation d'air (4) ayant une ouverture (43) arrière et deux ouvertures (43) longitudinales pour permettre l'admission d'air extérieur dans la galerie de circulation d'air (4).

5. Engin agricole autonome (1) selon l'une des revendications précédentes, l'au moins une ouverture (43) de la galerie de circulation d'air (4) étant fermée par un grillage configuré pour laisser passer l'air et pour bloquer l'admission de corps étrangers dans la galerie de circulation d'air (4).

6. Engin agricole autonome (1) selon l'une des revendications précédentes, le système de motorisation comprenant également un dispositif d'échappement et un filtre à air (33), le moteur (3) étant disposé d'un côté de l'ossature (2), c'est-à-dire sensiblement dans l'alignement d'une branche de la section en U de l'ossature (2), et le filtre à air (33) étant disposé à l'opposé du moteur (3), c'est-à-dire sensiblement dans l'alignement d'une branche opposée de la section en U de l'ossature (2), le filtre à air (33) étant relié au moteur (3) par un canal de circulation d'air.

7. Engin agricole autonome (1) selon l'une des revendications précédentes, comprenant par ailleurs au moins une pompe principale d'avancement, une pompe de gavage de la pompe principale d'avancement et une pompe accessoire disposée dans un volume situé entre une zone porte-outil, située dans la voie et dans l'empattement de l'engin agricole autonome (1), et le toit, la pompe principale d'avancement étant configurée pour fournir de l'énergie hydraulique à des systèmes hydrauliques permettant l'avancement de l'engin agricole autonome (1) et la pompe accessoire étant configurée pour fournir de l'énergie hydraulique à des systèmes hydrauliques permettant l'animation d'outillage monté sur le porte-outil.

8. Engin agricole autonome (1) selon l'une des revendications précédentes, comprenant un turbo et un refroidisseur intermédiaire, dans lequel le système de refroidissement est par ailleurs configuré pour refroidir un flux d'air d'admission en sortie du turbo, le flux d'air d'admission en sortie du turbo étant refroidi par l'air circulant dans la galerie de circulation d'air (4) au moyen du refroidisseur intermédiaire.

9. Engin agricole autonome (1) selon l'une des revendications précédentes, le moteur (3) étant un moteur diesel ayant une puissance supérieure à 50 CV.

10. Engin agricole autonome (1) selon l'une des revendications précédentes, formant un engin agricole autonome de pulvérisation comprenant deux réservoirs latéraux (11, 12) disposés substantiellement entre la roue (13) avant et la roue (13) arrière, respectivement de chaque côté de l'engin agricole autonome (1) de pulvérisation, l'engin agricole autonome (1) de pulvérisation comprenant par ailleurs un système de pulvérisation, le système de pulvérisation comprenant au moins deux panneaux récupérateurs latéraux, les réservoirs latéraux (11, 12) et les panneaux récupérateurs étant situés dans la voie de l'engin agricole autonome (1) de pulvérisation, correspondant à sa largeur (102), sensiblement dans l'alignement de chaque flanc défini par l'ossature (2), de chaque côté de l'engin agricole autonome (1) de pulvérisation.

## Patentansprüche

1. Autonome landwirtschaftliche Maschine (1), umfassend einen Rahmen (2), der einen Abschnitt in Form eines umgekehrten U vorweist, mit dem mindestens ein Vorderrad (13) und mindestens ein Hinterrad (13) verbunden sind, und der eine Spur definiert, wobei der Rahmen (2) zwei Flanken, die den Zweigen des umgekehrten U entsprechen, und ein Dach aufweist, das der Basis des umgekehrten U entspricht, die autonome landwirtschaftliche Maschine (1) außerdem umfassend ein thermisches Motorisierungssystem, das einen Motor (3) enthält, **dadurch gekennzeichnet, dass** die autonome landwirtschaftliche Maschine (1) ein Kühlsystem, das einen Luftzirkulationsgang (4) vorweist, der in dem oberen Teil des Rahmens (2) direkt unter dem Dach eingerichtet ist, umfasst, wobei der Luftzirkulationsgang (4) mindestens eine Öffnung (43) zum Ermöglichen des Einlassens von Außenluft in den Luftzirkulationsgang (4) und einen oberen Luftauslass zum Ausstoßen von heißer Luft nach oben über das Dach vorweist, wobei das Kühlsystem ferner eine Belüftungsvorrichtung zum Sicherstellen der Luftzirkulation in dem Luftzirkulationsgang (4) enthält, wobei der Luftzirkulationsgang (4) zum Ermöglichen der Luftzirkulation zum Kühlen des Motors (3), insbesondere zum Kühlen eines in dem Motor (3) zirkulierenden Wasserstroms und/oder eines in Hydraulikkreisläufen von Hydrauliksystemen der autonomen landwirtschaftlichen Maschine (1) zirkulierenden Ölstroms, konfiguriert ist.

2. Autonome landwirtschaftliche Maschine (1) nach Anspruch 1, wobei der Luftzirkulationsgang (4) Längs- und Querkorridore (41), die zum Herbeiführen, zwischen diesen Korridoren (41), von mindestens einem Volumen (42) angeordnet sind, umfasst, die autonome landwirtschaftliche Maschine (1) umfassend mindestens einen in dem Volumen (42) eingerichteten Kühlkörper, um Wärme aus der in dem Luftzirkulationsgang (4) zirkulierenden Luft abzuführen.

3. Autonome landwirtschaftliche Maschine (1) nach Anspruch 1 oder 2, die Belüftungsvorrichtung umfassend mindestens einen über dem Dach eingerichteten Ventilator (6).

4. Autonome landwirtschaftliche Maschine (1) nach einem der vorstehenden Ansprüche, wobei der Luftzirkulationsgang (4) eine hintere Öffnung (43) und zwei Längsöffnungen (43) zum Ermöglichen des Einlassens von Außenluft in den Luftzirkulationsgang (4) vorweist.

5. Autonome landwirtschaftliche Maschine (1) nach einem der vorstehenden Ansprüche, wobei die mindestens eine Öffnung (43) des Luftzirkulationsgangs (4) durch ein Gitter verschlossen ist, das zum Durchlassen von Luft und zum Blockieren des Einlassens von Fremdkörpern in den Luftzirkulationsgang (4) konfiguriert ist.

6. Autonome landwirtschaftliche Maschine (1) nach einem der vorstehenden Ansprüche, das Motorisierungssystem ferner umfassend eine Abgasvorrichtung und einen Luftfilter (33), wobei der Motor (3) auf einer Seite des Rahmens (2) eingerichtet ist, d. h. im Wesentlichen in Ausrichtung mit einem Zweig des Abschnitts in Form eines umgekehrten U des Rahmens (2), und der Luftfilter (33) gegenüber dem Motor (3) eingerichtet ist, d. h. im Wesentlichen in Ausrichtung mit einem gegenüberliegenden Zweig des Abschnitts in Form eines umgekehrten U des Rahmens (2), wobei der Luftfilter (33) mit dem Motor (3) durch einen Luftzirkulationskanal verbunden ist.

7. Autonome landwirtschaftliche Maschine (1) nach einem der vorstehenden Ansprüche, außerdem umfassend mindestens eine Hauptvorschubpumpe, eine Überdruckpumpe für die Hauptvorschubpumpe und eine Zusatzpumpe, die in einem Volumen eingerichtet ist, das zwischen einem Werkzeugträgerbereich, der in der Spur und in dem Radstand der autonomen landwirtschaftlichen Maschine (1) gelegen ist, und dem Dach gelegen ist, wobei die Hauptvorschubpumpe zum Versorgen mit Hydraulikenergie der Hydrauliksysteme, die den Vorschub der autonomen landwirtschaftlichen Maschine (1) ermöglichen, konfiguriert ist, und die Zusatzpumpe zum Versorgen mit Hydraulikenergie der Hydrauliksysteme, die den Betrieb von Werkzeugausstattung ermöglichen, die auf dem Werkzeugträger montiert ist, konfiguriert ist.

8. Autonome landwirtschaftliche Maschine (1) nach einem der vorstehenden Ansprüche, umfassend einen Turbo und einen Zwischenkühler, wobei das Kühlsystem außerdem zum Kühlen eines Einlassluftstroms an dem Auslass des Turbos konfiguriert ist, wobei der Einlassluftstrom an dem Auslass des Turbos durch die in dem Luftzirkulationsgang (4) zirkulierende Luft mittels des Zwischenkühlers gekühlt wird.

9. Autonome landwirtschaftliche Maschine (1) nach einem der vorstehenden Ansprüche, wobei der Motor (3) ein Dieselmotor, der eine Leistung größer als 50 PS aufweist, ist.

10. Autonome landwirtschaftliche Maschine (1) nach einem der vorstehenden Ansprüche, die eine autonome landwirtschaftliche Spritzmaschine ausbildet, umfassend zwei seitliche Tanks (11, 12), die im Wesentlichen zwischen dem Vorderrad (13) und dem Hinterrad (13) jeweils auf jeder Seite der autonomen landwirtschaftlichen Spritzmaschine (1) eingerichtet sind, die autonome landwirtschaftliche Spritzmaschine (1) außerdem umfassend ein Spritzsystem, das Spritzsystem umfassend mindestens zwei seitliche Auffangplatten, wobei die seitlichen Tanks (11, 12) und die Auffangplatten in der Spur der autonomen landwirtschaftlichen Spritzmaschine (1) entsprechend ihrer Breite (102) im Wesentlichen in Ausrichtung mit jeder durch den Rahmen (2) definierten Flanke auf jeder Seite der autonomen landwirtschaftlichen Spritzmaschine (1) gelegen sind.

## Claims

1. Autonomous agricultural machine (1) comprising a frame (2) with an inverted U-shaped section, to which at least one front wheel (13) and at least one rear wheel (13) is connected, defining a track, the frame (2) having two sides, corresponding to the arms of the inverted U, and a roof, corresponding to the base of the inverted U, the autonomous agricultural machine (1) further comprising a heat engine system including an engine (3), **characterized in that** the autonomous agricultural machine (1) comprises a cooling system having an air circulation duct (4) arranged in the upper part of the frame (2), directly under the roof, the air circulation duct (4) having at least one opening (43) for allowing the intake of outside air into the air circulation duct (4) and an upper air outlet for expelling hot air upwards, above the roof, the cooling system also comprising a ventilation device for ensuring the circulation of air in the air circulation duct (4), the air circulation duct (4) being configured to allow the circulation of air for cooling the engine (3), in particular for cooling a flow of water circulating in the engine (3) and/or a flow of oil circulating in hydraulic circuits of hydraulic systems of the autonomous agricultural machine (1).

2. Autonomous agricultural machine (1) according to claim 1, wherein the air circulation duct (4) comprises longitudinal and transverse corridors (41) arranged to provide, between these corridors (41), at least one volume (42), the autonomous agricultural machine (1) comprising at least one radiator arranged in said volume (42), so as to dissipate the heat in the air circulating in the air circulation duct (4).

3. Autonomous agricultural machine (1) according to claim 1 or 2, the ventilation device comprising at least one fan (6) arranged above the roof.

4. Autonomous agricultural machine (1) according to one of the preceding claims, the air circulation duct (4) having a rear opening (43) and two longitudinal openings (43) for allowing the intake of outside air into the air circulation duct (4).

5. Autonomous agricultural machine (1) according to one of the preceding claims, the at least one opening (43) of the air circulation duct (4) being closed by a screen which is configured to let air through and to block the intake of foreign bodies into the air circulation duct (4).

6. Autonomous agricultural machine (1) according to one of the preceding claims, the engine system also comprising an exhaust device and an air filter (33), the engine (3) being arranged on one side of the frame (2), i.e. substantially in alignment with one arm of the U-shaped section of the frame (2), and the air filter (33) being arranged opposite the engine (3), i.e. substantially in alignment with an opposite arm of the U-shaped section of the frame (2), the air filter (33) being connected to the engine (3) by an air circulation channel.

7. Autonomous agricultural machine (1) according to one of the preceding claims, further comprising at least one main forward pump, a booster pump for the main forward pump and an auxiliary pump arranged in a volume located between a tool-carrier zone, which is located in the track and in the wheelbase of the autonomous agricultural machine (1), and the roof, the main forward pump being configured to supply hydraulic power to hydraulic systems enabling the autonomous agricultural machine (1) to move forwards, and the auxiliary pump being configured to supply hydraulic power to hydraulic systems making it possible to drive the tool which is mounted on the tool-carrier.

8. Autonomous agricultural machine (1) according to one of the preceding claims, comprising a turbocharger and an intercooler, wherein the cooling system is further configured to cool an intake air flow leaving the turbocharger, the intake air flow leaving the turbocharger being cooled by the air circulating in the air circulation duct (4) by means of the intercooler.

9. Autonomous agricultural machine (1) according to one of the preceding claims, the engine (3) being a diesel engine with a power greater than 50 hp.

10. Autonomous agricultural machine (1) according to one of the preceding claims, forming an autonomous agricultural spraying machine comprising two lateral tanks (11, 12) arranged substantially between the front wheel (13) and the rear wheel (13), respectively on each side of the autonomous agricultural spraying machine (1), the autonomous agricultural spraying machine (1) further comprising a spraying system, the spraying system comprising at least two lateral collection panels, the lateral tanks (11, 12) and the collection panels being located in the track of the autonomous agricultural spraying machine (1), corresponding to its width (102), substantially in alignment with each side defined by the frame (2), on each side of the autonomous agricultural spraying machine (1).
